# EUROPEAN PATENT APPLICATION

(11) **EP 4 070 881 A1**
(43) Date of publication of application: **12.10.2022**
(21) Application number: 19955272.0
(22) Date of filing: 06.12.2019
(51) Int. Cl.: B01J 3/06

(54) **COMPRESSION DEVICE, COMPRESSION PROCESS, METHOD FOR PRODUCING SYNTHETIC MATERIALS AND METHOD FOR CHARACTERIZING A SAMPLE**

(71) Applicant: Centro Nacional de Pesquisa em Energia e Materiais - CNPEM, 13083-100 Campinas - SP (BR)
(72) Inventor: NETO, Narcizo Marques de Souza, 13083-100 Campinas SP (BR); JUNIOR, Jairo Fonseca, 13083-100 Campinas SP (BR); FRANCISCO, Bárbara de Abreu, 13083-100 Campinas SP (BR); ELEOTERIO, Marcos Antonio da Silva, 13083-100 Campinas SP (BR)
(74) Representative: Petraz, Gilberto Luigi
(86) International application number: PCT/BR2019/050526
(87) International publication number: WO 2021/108871

(57) **Abstract**

The present invention describes a compression device, a compression process, a method of producing synthetic materials and a method of sample characterization. The present invention belongs to the fields of Physics, Chemistry and Engineering.

## Description

### Field of the invention

The present invention describes a compression device, a compression process, a method of producing synthetic materials and a method of sample characterization. The present invention belongs to the fields of Physics, Chemistry and Engineering.

### Background of the Invention

The study of materials under high pressures is of great scientific and technological interest. High pressures can be found inside planets and the study of these materials's behavior is extensively carried out in the fields of chemistry and physics.

Several equipment to increase the pressure in a controlled way can be found in the state of the art, among them we can highlight the anvil cells, mainly the diamond anvil cells.

A diamond anvil cell comprises at least two diamonds (anvils) with a cavity between these anvils. By applying force, bringing the two diamonds together, the pressure inside this cavity is increased several times.

This diamond anvil cell is a high pressure cell used in a wide range of techniques for studying the properties of materials at high pressures, for example techniques using synchrotron light sources such as spectroscopy, x-ray diffraction and Raman spectroscopy..

In the search for the state of the art in scientific and patent literature, the following documents were found that deal with the subject:

The document Eremets *et al.,* 1992, reveals a miniature cell of diamond anvil comprising a differential screw that acts on a wedge, and a lever arm that is lifted by the displacement of that wedge, and in turn acts on a piston to exert force and consequently pressure on a diamond anvil cell. In the document, they comment that it takes a force of 10,000 N to generate a pressure of just 100 gigapascal.

Document JP2948705B2 discloses a device for generating high pressures comprising a system of six anvils using large presses.

Document JP2002066301 A discloses a device to generate high pressures using a system of cylinders and sliding blocks with inclined planes, requiring the use of large presses.

Document CN102553494B discloses a device for generating high pressures using a system of six multi-stage anvils, and at least one solid block as a means of transmitting force to pressure.

Document CN109781539A discloses a framework for applying pressures to bodies for penetration depth testing. The document uses an inclined plane to increase the force applied to these bodies.

Thus, from what can be seen from the researched literature, no documents were found anticipating or suggesting the teachings of the present invention, so that the solution proposed here has novelty and inventive step compared to the state of the art.

The devices found in the state of the art use complex systems with high initial forces to generate high pressures, being the operation of these devices of high cost and high complexity.

### Brief description of the Invention

Thus, the present invention solves the problems of the prior art with a simple, practical and efficient compression device, which generates high pressures comprising at least one component A, at least one component B and at least one compression chamber.

In a first object, the present invention discloses a compression device that comprises at least one assembly comprising: a) at least one component A having a surface A' inclined at an angle alpha, greater than 0° and less than 180°, with respect to an X axis; b) at least one component B having a surface B' inclined at the same angle alpha with respect to said X axis and a surface B" movable along a Y axis; c) at least one compression chamber configured to receive a force D from component B, by surface B"; wherein,
- component A is linkable to component B by contact between surfaces A' and B';
- component A is configured to receive a force P and move in the direction of the X axis.

In a second object, the present invention discloses a process of compressing a sample in a compression chamber of a compression device that comprises at least one assembly comprising: a) at least one component A having a surface A' inclined at an angle alpha greater than 0° and less than 180° with respect to an X axis; b) at least one component B having a surface B' inclined at the same angle alpha with respect to said X axis and a surface B" movable along a Y axis; c) at least one compression chamber configured to receive a force D from component B, by surface B"; wherein,
- component A is linkable to component B by contact between surfaces A' and B';
- component A is configured to receive a force P and move in the direction of the X axis;
- at least one step of applying force P with a vector on the X axis to component A.

In a third object, the present invention discloses a method of producing synthetic materials comprising submitting a raw material in a compression chamber in a compression process comprising at least one step of applying force P with vector on the X axis to component A of a compression device comprising at least one assembly comprising: a) at least one component A having a surface A' inclined at an angle alpha, greater than 0° and less than 180°, in relation to an X axis; b) at least one component B having a surface B' inclined at the same angle alpha with respect to said X axis and a surface B" movable along a Y axis; c) at least one compression chamber configured to receive a force D from component B, by surface B"; wherein,
- component A is linkable to component B by contact between surfaces A' and B';
- component A is configured to receive a force P and move in the direction of the X axis.

In a fourth object, the present invention discloses a sample characterization method comprising submitting a sample to a compression chamber in a process compression device comprising at least one step of applying force P with vector on the X axis to component A of a compression device comprising at least one assembly comprising: a) at least one component A having a surface A' inclined at an angle alpha , greater than 0° and less than 180°, with respect to an X axis; b) at least one component B having a surface B' inclined at the same angle alpha with respect to said X axis and a surface B" movable along a Y axis; c) at least one compression chamber configured to receive a force D from component B, by surface B"; wherein,
- component A is linkable to component B by contact between surfaces A' and B';
- component A is configured to receive a force P and move in the direction of the X axis; and at least one step of detecting spectroscopic and/or electromagnetic properties of said sample.

These and other objects of the invention will be immediately appreciated by those skilled in the art and will be described in detail below.

### Brief Description of the Figures

The following figures are presented:
Figure 1 shows a perspective exploded view of an embodiment of a compression device of the present invention comprising an embodiment of a component A (1), an embodiment of a component B (2), an embodiment of a compression chamber (5), an embodiment of an X axis and an embodiment of a Y axis.
Figure 2 shows a perspective sectional view of an embodiment of a device compression chamber of the present invention comprising an anvil cell as a compression chamber (5).
Figure 3 shows a top view of an embodiment of a component A (1).
Figure 4 shows a rear view of an embodiment of a component A (1).
Figure 5 shows the AA section indicated in figure 4.
Figure 6 shows highlighted region B indicated in figure 5.
Figure 7 shows a left side view of an embodiment of a component A (1).
Figure 8 highlights the region C indicated in figure 7.
Figure 9 shows a front view of an embodiment of a piston [component B (2)].
Figure 10 shows the BB section indicated in figure 9.
Figure 11 shows highlighted region C indicated in figure 10.
Figure 12 shows a top view of an embodiment of a piston [component B(2)].
Figure 13 shows a bottom view of an embodiment of a piston [component B (2)].
Figure 14 shows the DD section indicated in figure 13.
Figure 15 shows in detail the E region indicated in figure 14.

### Detailed Description of the Invention

The present invention discloses a compression device that allows the generation of high pressures in an efficient, practical and simple way.

From a single mechanical reduction of an inclined plane, the device of the present invention is capable of generating high pressures, requiring much lower initial forces than those of the state of the art to achieve the same pressure.

As this initial force is much smaller, the device of the present invention can be more compact and efficient, reducing costs and mechanical energy losses.

The device of the present invention comprises at least one component A (1), at least one component B (2) and at least one compression chamber (5). These components can be positioned on an X axis and a Y axis.

In the present invention, it is understood that the displacement of a component A (1) is axial along the X axis, while the displacement of a component B (2) is axial along the Y axis. In one embodiment, this X axis is perpendicular to the Y axis.

In the present invention, it is understood that the displacement of a component C is axial along the X' axis, whereas the displacement of a component D is axial along the Y' axis. In one embodiment, this X' axis is perpendicular to the Y' axis. In one embodiment, the Y axis comprises the Y' axis

In the present invention, it is understood that a compression chamber (5) is an object capable of withstanding high pressures (between 1 and 1000 gigapascal) and/or forces (between 1 and 8000 N), which, when subjected to pressure and/or force, generates a pressure increase in an internal region of said compression chamber (5).

In a first object, the present invention discloses a compression device that comprises at least one assembly comprising: a) at least one component A (1) having a surface A' (3) inclined at an angle alpha, greater than 0° and less than 180°, with respect to an X axis; b) at least one component B (2) having a surface B' (4) inclined at the same angle alpha with respect to said X axis and a surface B" (6) movable along a Y axis; c) at least one compression chamber (5) configured to receive a force D from component B (2), by surface B" (6); wherein,
- component A (1) is linkable to component B (2) by contact between surfaces A' (3) and B' (4);
- component A (1) is configured to receive a force P and move in the direction of axis X.

In one embodiment, the compression device additionally comprises at least one more assembly comprising: a) at least one component C having a surface C' inclined at an angle beta, greater than 0° and less than 180°, with respect to an axis X'; b) at least one component D having a surface D' inclined at the same angle beta in relation to said axis X' and a surface D" movable along an axis Y'; c) at least one compression chamber (5) configured to receive a force D from component B (2), by surface B" (6), and configured to receive a force D' from component D, by surface D" ; wherein,
- component C is linkable to component D by contact between surfaces C and D';
- component C is configured to receive a force P' and move in the direction of the X' axis.

In one embodiment the value of an alpha angle, or a beta angle is between 0° and 90°. In one embodiment the value of an alpha angle, or a beta angle is between 0.01° and 9°. In one embodiment the value of an alpha angle, or a beta angle is between 0.1° and 5°. In one embodiment the value of an alpha angle, or a beta angle is between 1° and 3°. In one embodiment the value of an alpha angle, or a beta angle, is 1.145°.

In one embodiment, the device comprises at least two sets of components A (1) and B (2). In one embodiment, at least six sets of components A (1) and B (2).

In one embodiment, the compression device comprises at least one viewing channel of the compression chamber (5), or at least one monitoring channel of the compression chamber (5), or at least one viewing and monitoring channel of the compression chamber (5). This visualization and/or monitoring channel allows the content of the compression chamber (5) to be observed, for example, by spectroscopic means.

In one embodiment, the viewing and/or monitoring channel is axial to the Y axis. In one embodiment, the compression chamber (5) allows viewing and/or monitoring through spectroscopic pathways. In one embodiment, this visualization and/or monitoring channel can be a hole, or a tear, or even a material with high transmissibility to the electromagnetic radiation spectrum.

In one embodiment, the compression chamber (5) comprises an anvil cell. In one embodiment the compression chamber (5) comprises a diamond anvil cell comprising at least one diamond, optionally at least two diamonds. In one embodiment, the diamond anvil cell comprises at least six diamonds. In one embodiment, the diamonds allow electromagnetic radiation to pass into the compression chamber (5).

In one embodiment, the compression chamber (5) comprises a material transmitting the pressure resulting from force D or force D'. This material allows uniform distribution of pressure throughout the compression chamber (5). In one embodiment, this material is solid, liquid, or gas.

In one embodiment, the compression device comprises at least one linear support of component A (1), or component C, or both. This part has the function of linearly guiding the base of component A (1) or C, preventing these components from turning, eliminating the mechanical forces of torsion.

In one embodiment, the compression device comprises a mechanical support base for the components and for the compression chamber (5).

In one embodiment, the compression device comprises a rocker arm actuator on the Y axis. This rocker arm is responsible for aligning and fixing a first anvil. In one embodiment, the anvil cell comprises a support for securing a second anvil. In one embodiment, this support has high X-ray transmissibility.

In one embodiment, the device comprises a motorized translation stage for modulating P force and/or P' force.

In a second object, the present invention discloses a process of compressing a sample in a compression chamber (5) of a device that comprises at least one assembly comprising: a) at least one component A (1) having a surface A' (3) inclined at an angle alpha, greater than 0° and less than 180°, with respect to an X axis; b) at least one component B (2) having a surface B' (4) inclined at the same angle alpha with respect to said X axis and a surface B" (6) movable along a Y axis; c) at least one compression chamber (5) configured to receive a force D from component B (2), by surface B" (6); wherein,
- component A (1) is linkable to component B (2) by contact between surfaces A' (3) and B' (4);
- component A (1) is configured to receive a force P and move in the direction of the X axis;
- at least one step of applying force P with a vector on the X axis to component A (1).

In one embodiment, the force applied to this device is modulated by a motorized translation stage.

In one embodiment, the compression process comprises a temperature control step in the compression chamber (5). In one embodiment, the compression process comprises a step of generating a magnetic field in the compression chamber (5).

In one embodiment, in the compression process the linkage between the components occurs by the contact between the surfaces A' (3) and B' (4), and that the force P displaces the component A (1) in the direction of the X axis, and by the contact between the surfaces A' (3) and B' (4), the displacement of the component A (1) displaces the component B (2) in the direction of a Y axis, generating a force D in the Y-axis direction, wherein component B (2) exerts force D in at least one compression chamber (5).

In a third object, the present invention discloses a method of producing synthetic materials comprising submitting a raw material in a compression chamber (5) in a compression process comprising at least one step of applying force P with vector in the axis X to component A (1) of a compression device comprising at least one assembly comprising: a) at least one component A (1) having a surface A' (3) inclined at an angle alpha greater than 0< o>e less than 180°, with respect to an X axis; b) at least one component B (2) having a surface B' (4) inclined at the same angle alpha with respect to said X axis and a surface B" (6) movable along a Y axis; c) at least one compression chamber (5) configured to receive a force D from component B (2), by surface B" (6); wherein,
- component A (1) is linkable to component B (2) by contact between surfaces A' (3) and B' (4);
- component A (1) is configured to receive a force P and move in the direction of the X axis.

In one embodiment, the compression device can be used to synthesize materials at high pressures.

In a fourth object, the present invention discloses a sample characterization method comprising submitting a sample in a compression chamber (5) in a compression process comprising at least one step of applying force P with vector on the X axis to component A (1) of a compression device comprising at least one assembly comprising: a) at least one component A (1) having a surface A' (3) inclined at an angle alpha greater than 0° and less than 180°, with respect to an X axis; b) at least one component B (2) having a surface B' (4) inclined at the same angle alpha with respect to said X axis and a surface B" (6) movable along a Y axis; c) at least one compression chamber (5) configured to receive a force D from component B (2), by surface B" (6); wherein,
- component A (1) is linkable to component B (2) by contact between surfaces A' (3) and B' (4);
- component A (1) is configured to receive a force P and move in the direction of the X axis; and at least one step of detecting spectroscopic and/or electromagnetic properties of said sample.

In one embodiment, the compression device is used to study materials under high pressure. This study can be done from spectroscopic analysis through the visualization and/or monitoring channel. Further, other analyses may involve measurements of conductivity, impedance and electrical resistivity.

The present invention defines the following clauses:
Clause 1. Compression device comprising at least one assembly comprising: a) at least one component A (1) having a surface A' (3) inclined at an angle alpha, greater than 0° and less than 180°, in relation to an X axis; b) at least one component B (2) having a surface B' (4) inclined at the same angle alpha with respect to said X axis and a surface B" (6) movable along a Y axis; c) at least one compression chamber (5) configured to receive a force D from component B (2), by surface B" (6); wherein,
   - component A (1) is linkable to component B (2) by contact between surfaces A' (3) and B' (4);
   - component A (1) is configured to receive a force P and move in the direction of the X axis.
Clause 2. Compression device according to clause 1 additionally comprising at least one more assembly comprising: a) at least least one component C having a surface C' inclined at an angle beta, greater than 0° and less than 180°, with respect to an axis X'; b) at least one component D having a surface D' inclined at the same angle beta in relation to said axis X' and a surface D" movable along an axis Y'; c) at least one compression chamber (5) configured to receive a force D from component B (2), by surface B" (6), and configured to receive a force D' from component D, by surface D"; wherein,
   - component C is linkable to component D by contact between surfaces C and D';
   - component C is configured to receive a force P' and move in the direction of the X' axis.
Clause 3. Compression device according to clause 1 or 2, wherein the value of an alpha angle, or a beta angle is between 0° and 90°.
Clause 4. Compression device according to any of the preceding clauses, wherein the value of an alpha angle, or a beta angle, is between 0.01 and 9°.
Clause 5. Compression device according to any of the preceding clauses, wherein the value of an alpha angle, or a beta angle, is between 0.1° and 5°.
Clause 6. Compression device according to any of the preceding clauses, wherein the value of an alpha angle, or a beta angle is between 1° and 3°.
Clause 7. Compression device according to any of the preceding clauses, wherein the value of an alpha angle, or a beta angle, is about 1.145°.
Clause 8. Compression device according to any of the preceding clauses, wherein the device comprises at least two sets of components A (1) and B (2).
Clause 9. Compression device according to any of the preceding clauses, wherein the device comprises at least six sets of components A (1) and B (2).
Clause 10. Compression device according to any of the preceding clauses comprising at least a viewing channel, or a monitoring channel, or a viewing and monitoring channel of the compression chamber (5).
Clause 11. Compression device according to clause 10, wherein the viewing and/or monitoring channel is axial to the Y axis.
Clause 12. Compression device according to any of the preceding clauses, wherein the compression chamber (5) comprises an anvil cell.
Clause 13. Compression device according to any of the preceding clauses, wherein the anvil cell is a diamond anvil cell comprising at least one diamond.
Clause 14. Compression device according to any of the preceding clauses, wherein the diamond anvil cell comprises at least two diamonds.
Clause 15. Compression device according to any of the preceding clauses, wherein the diamond anvil cell comprises at least six diamonds.
Clause 16. Compression device according to any of the preceding clauses, wherein the compression chamber (5) comprises a material transmitting the pressure resulting from force D or force D'.
Clause 17. Compression device according to any of the preceding clauses, wherein the pressure transmitting material is a solid, liquid, or gaseous material.
Clause 18. Compression device according to any of the preceding clauses, wherein the force P, or the force P', or both are modulated by a stepper motor.
Clause 19. Compression device according to any of the preceding clauses comprising at least one linear support linked to component A (1) and/or component C.
Clause 20. Compression device according to any of the preceding clauses comprising a base for mechanical support of components A (1), B (2) and for the compression chamber (5).
Clause 21. Process of compressing a sample in a compression chamber (5) of a device as defined in any of the preceding clauses comprising at least one step of applying force P with vector on the X axis to component A (1).
Clause 22. Compression process, according to clause 21 , in which the linkage between the components occurs by the contact between the surfaces A' (3) and B' (4), and that the force P displaces component A (1) in the direction of the X axis, and by the contact between surfaces A' (3) and B' (4), the displacement of component A (1) displaces component B (2) in the direction of a Y axis, generating a force D in the direction of the Y axis, wherein component B (2) exerts force D in at least one compression chamber (5).
Clause 23. Method of producing synthetic materials comprising subjecting a raw material to a compression chamber (5) in a compression process as defined in any of clauses 21 to 22.
Clause 24. Characterization method of sample comprising subjecting a sample to a compression chamber (5) in a compression process as defined in any of clauses 21 to 22, and at least one step of detecting spectroscopic and/or electromagnetic properties of said sample.

### Example 1 - Diamond Anvil Cell

The examples shown here are only intended to exemplify one of the numerous ways to perform the invention, however without limiting its scope.

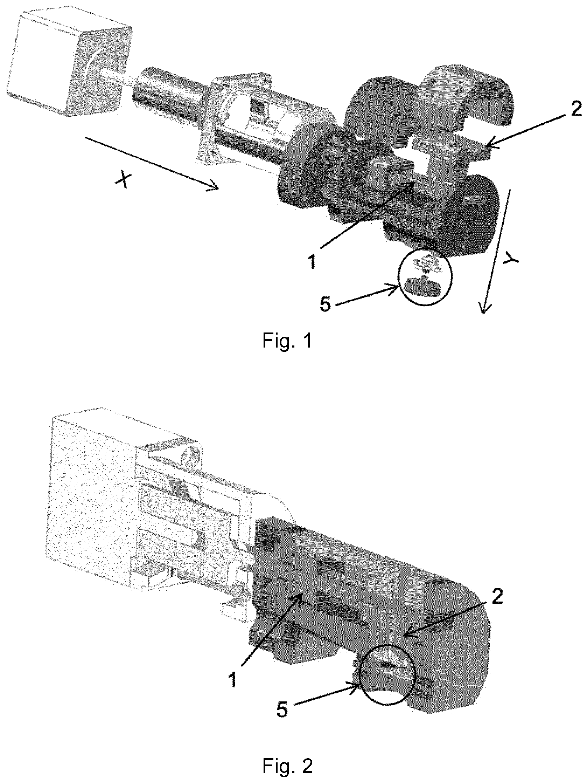

An example of the compression device comprising compression chamber (5) comprising a diamond anvil cell (CBD), as shown in figure 1 and 2.

A first base is made of stainless steel AISI 316L. Its function is to carry out all the mechanical structuring of the cell, also serving as a cylinder, with a geometric tolerance of cylindricity less than 2 µm, where another part will act as a piston [component B (2)], with a diametral clearance from 8 µm to 10 µm. Given an applied force of 6000N, it has a structural safety factor of 1.28.

A second base is made of stainless steel AISI 316L. It has the function of acting as one of the supports of a sliding component A (1), acting in the transmission of force from component A (1) to the piston [component B (2)] of the cell.

A third base is made of stainless steel AISI 316L. It has the function of fixing, by means of rolling, the M4 transmission screw that couples to component A (1) of the device.

A fourth base is made of AISI 316L stainless steel. Its function is to linearly guide the base of component A (1), preventing this component from rotating and, consequently, eliminating the mechanical forces of torsion in component A (1).

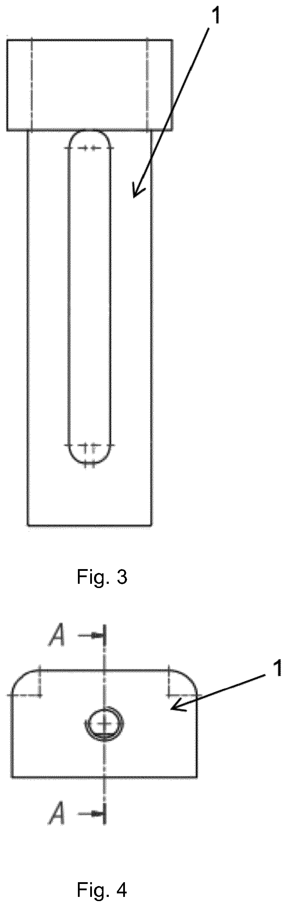

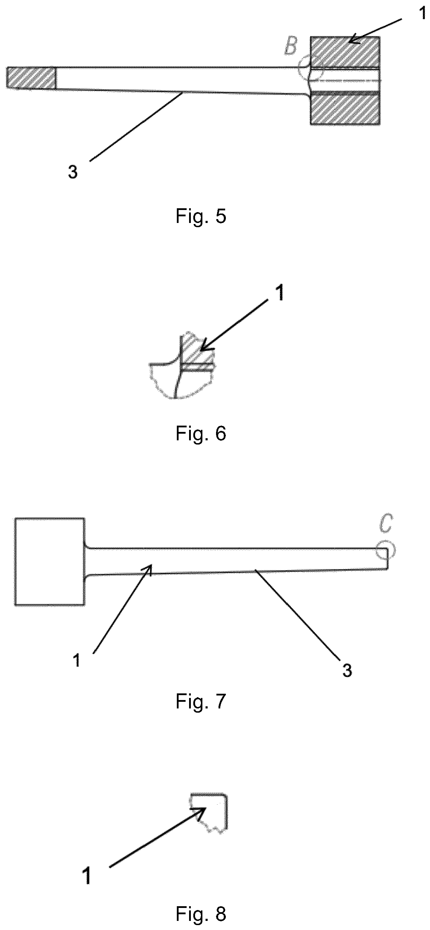

A component A (1) (figures 3 to 8) made of stainless steel AISI 316L. Its function is to multiply the force perpendicular to the applied displacement, directly pushing the piston [component B (2)] of the cell. It is equipped with a base that has an M4 threaded hole that couples to the transmission screw. An M4 transmission screw is made of AISI 316L stainless steel. It is the cell transmission screw, fixed by means of a ball bearing, on one side coupled to the stepper motor and on the other side to the inclined plane of the cell. An M4 screw bushing is made of AISI 316L stainless steel. Allows the fixing of an M4 x 40 screw in a ball bearing.

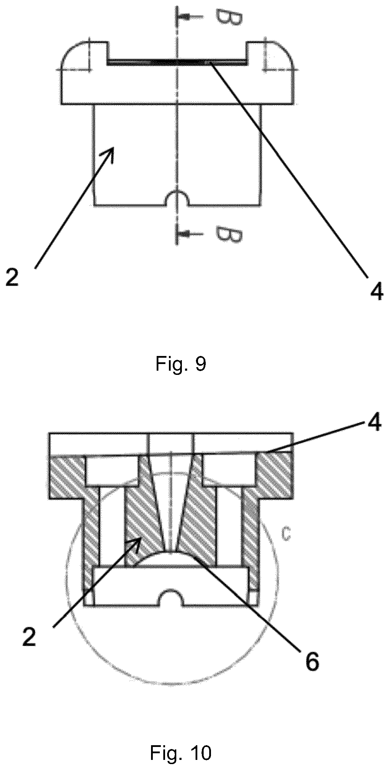

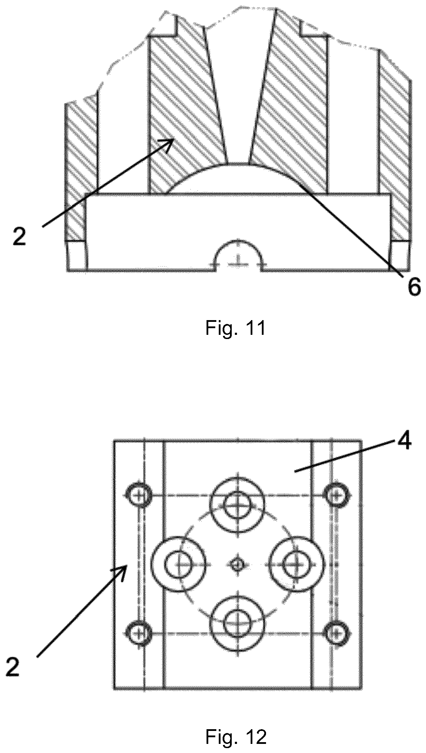

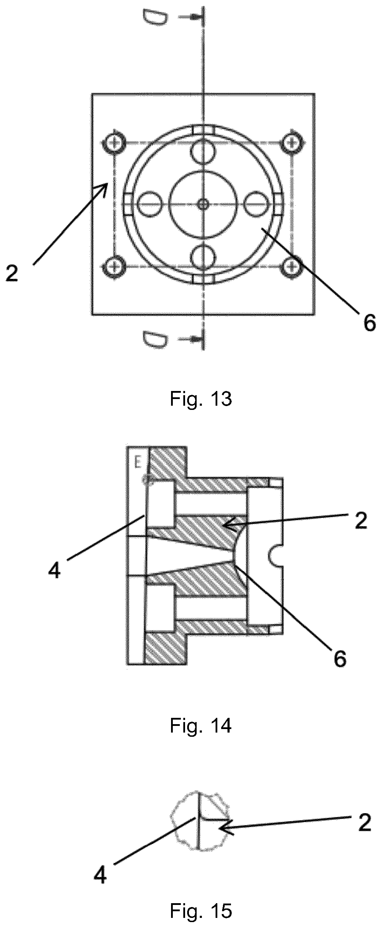

A piston or component B (2) (figures 9 to 15) is made of AISI 316L stainless steel. Its function is to act as a piston [component B (2)] of the cell, because in addition to directly receiving the force of component A (1), it pushes an actuator rocker, and consequently one of the diamonds, on the main axis of the cell. Given an applied force of 6000N, it has a structural safety factor of 1.06.

An actuator rocker arm is made of WC (tungsten carbide). Its function is to fix one of the diamonds in the cell, in addition to allowing an angular alignment of this diamond in relation to the other.

An upper actuator rocker arm is made of AISI 316L stainless steel. Its function is to fix and perform the angular alignment of the actuator rocker part by means of four M2,5 screws.

A support made of B4C (boron carbide), with a thickness of 4 mm, has a transparency of 76% to x-rays from 20 keV and, together with the first base, allows an exit angle 90°, essential for x-ray diffraction techniques.

A standard commercial stepper motor is responsible for rotating the drive screw, along with an aluminum base to support the motor. And a screw bushing is made of VC-131 material, which has the function of transmitting the movement from the stepper motor to the transmission screw.

In this embodiment, the stepper motor coupled with a transmission screw applies a force of 120N on a component A (1) with an alpha angle of 1.145° in relation to the X axis, allowing the application of a force of 6000N (transmitted force increased 50x) in a Y-axis diamond anvil cell system (figure 1), reaching pressures of the magnitude of 500 gigapascal.

Further, in this embodiment, a visualization and/or monitoring channel of the compression chamber (5) can be observed passing by the first base, the second base, the component A (1), the piston [component B (2)], by the actuator rockers and by the support.

Those skilled in the art will value the knowledge presented herein and may reproduce the invention in the embodiments presented and in other variants and alternatives, covered by the scope of the claims below.

## Claims

1. Compression device **characterized by** comprising at least one assembly that comprises: a) at least one component A (1) having a surface A' (3) inclined at an angle alpha, greater than 0° and less than 180°, with respect to a X axis; b) at least one component B (2) having a surface B' (4) inclined at the same angle alpha with respect to said X axis and a surface B" (6) movable along a Y axis; c) at least one compression chamber (5) configured to receive a force D from component B (2), by surface B" (6); wherein,
- component A (1) is linkable with component B (2) by contact between surfaces A' (3) and B' (4);
- component A (1) is configured to receive a force P and move in the direction of the X axis.

2. Compression device according to claim 1, **characterized by** further comprising at least one more assembly that comprises: a) at least one component C having a surface C' inclined at an angle beta, greater than 0° and less than 180°, with respect to to an X axis'; b) at least one component D having a surface D' inclined at the same angle beta in relation to said axis X' and a surface D" movable along an axis Y'; c) at least one compression chamber (5) configured to receive a force D from component B (2), by surface B" (6), and configured to receive a force D' from the component D, by surface D"; wherein,
- component C is linkable with component D by the contact between surfaces C and D';
- component C is configured to receive a force P' and move in the direction of the X' axis.

3. Compression device according to claim 1 or 2, **characterized in that** the value of an angle alpha or an angle beta is between 0° and 90°.

4. Compression device according to any of the preceding claims, **characterized in that** the value of an alpha angle, or a beta angle, is between 0.1° and 5°.

5. Compression device according to any of the preceding claims, **characterized in that** the value of an angle alpha, or an angle beta, is about 1.145°.

6. Compression device according to any of the preceding claims, **characterized by** comprising at least one visualization channel, or a monitoring channel, or a visualization and monitoring channel of the compression chamber (5).

7. Compression device according to any of the preceding claims, **characterized in that** the compression chamber (5) comprises an anvil cell.

8. Compression device according to claim 7, **characterized in that** the anvil cell is a diamond anvil cell comprising at least one diamond.

9. Compression device according to any of the preceding claims, **characterized in that** the compression chamber (5) comprises a material for transmitting the pressure resulting from force D or force D'.

10. Compression device according to any of the preceding claims, **characterized in that** the force P, or the force P', or both being modulated by a stepper motor.

11. Compression device according to any of the preceding claims, **characterized by** comprising at least one linear support linked with component A (1) and/or component C.

12. Process of compressing a sample in a compression chamber (5) of a device as defined in any of the preceding claims, **characterized by** comprising at least one step of applying force P with vector on the X axis to component A (1).

13. Compression process, according to claim 12, **characterized by** the link between the components occurs by the contact between the surfaces A' (3) and B' (4), and that the force P displaces the component A (1) in the direction of the X axis, and by the contact between the surfaces A' (3) and B' (4), the displacement of the component A (1) displaces the component B (2) in the direction of a Y axis, generating a force D in the direction of the Y axis, wherein the component B (2) exerts force D on at least one compression chamber (5).

14. Method of production of synthetic materials **characterized by** comprising submitting a raw material in a compression chamber (5) to a compression process as defined in any of claims 12 to 13.

15. Method of sample characterization, **characterized by** comprising submitting a sample in a compression chamber (5) to a compression process as defined in any of claims 12 to 13, and at least one step of detecting the spectroscopic and/or electromagnetic properties of the said sample.
